# EUROPEAN PATENT SPECIFICATION

(11) **EP 0 672 692 B1**
(45) Date of publication and mention of the grant of the patent: **23.02.2000**
(21) Application number: 95108505.9
(22) Date of filing: 09.04.1990
(51) Int. Cl.: C08F 285/00, C10M 149/02, C10M 151/02

(54) **Hybrid copolymers of nitrogenous graft copolymers with random nitrogenous copolymers, and methods for their preparation**
Hybrid-Copolymere aus stickstoffhaltigen Pfropfcopolymeren und statistischen stickstoffhaltigen Copolymeren und deren Verfahren zur Herstellung
Copolymères hybrides à partir de copolymères greffés azotés et de copolymères statistiques azotés et leur méthode de préparation

(30) Priority: 18.04.1989 US 339574
(43) Date of publication of application: 20.09.1995
(62) Divisional of application: 90303774.5
(73) Proprietor: Röhm RohMax Holding GmbH, 64293 Darmstadt (DE)
(72) Inventor: Bollinger, Joseph Martin, North Wales, Pennsylvania 19462 (US); Lai, Chung-Yin, Plymouth Meeting, Pennsylvania 19462 (US); Margosian, Daniel, Naperville, Illinois 60565-5427 (US); DELION, Anne Denise, Hatfield, PA 19440 (US)

(56) References cited:
- EP-A- 0 199 453
- US-A- 3 326 804
- US-A- 4 051 050
- US-A- 4 089 794
- US-A- 4 803 003

## Description

This invention is concerned with hybrid copolymers comprising graft copolymers of nitrogenous monomers on polymeric substrates and random copolymers, and to methods of producing such graft copolymers and hybrid copolymers.

Viscosity index improvers have been essentially excluded from diesel formulations up until about 1973 because it was believed that engine cleanliness was degraded by these additives. Multigrade oils which employ viscosity index improvers were therefore avoided for use as lubricating oils in large diesel engines. As a result, large diesel engines were operated continuously in cold weather because of the difficulty of restarting cold engines.

All lubricant fluids, whatever their service, are exposed to environments which tend to cause the fluid to become dirty with use. The contaminants may be either external in origin, as for example in automotive crankcases where sludge and varnish are formed from a complex reaction of partially burned gasoline and blowby gases, or internal via direct oxidative degradation of the lubricant itself. In either case, these deposits, unless dispersed, will settle out of the lubricant to cause plugging of filters or even sticking of moving parts where tight tolerances are involved.

Copolymers for use as additives in lubricating oils are well known. These copolymers are suitable for use as viscosity index improvers to provide multigrade lubricating oils which retain their fluidity at low temperatures. Polymethacrylates (PMA) have long been known for their excellence for influencing the viscosity-temperature characteristics of lubricants. Modification of the polymethacrylates can be made to combine dispersancy and viscosity-temperature control in a class of additives commonly known as dispersant viscosity index improvers, of which N-vinylpyrrolidone-alkyl methacrylate copolymers are a prime example (see US-A-3,506,574).

Polymethacrylates, although known to be excellent viscosity index improvers which provide outstanding low temperature performance, are, however, relatively inefficient as a thickener. PMA therefore requires higher use levels than, for example, olefin copolymers or hydrogenated styrene diene copolymers. The need for higher usage levels has made it difficult for multigrade oils formulated with PMA to gain commercial acceptance in diesel applications.

The preparation of highly dispersant graft copolymers by graft polymerization of a polar monomer to a preformed polymer substrate is well known (see, for example, US-A-4,146,489 and US-A-3,506,574). An advantage associated with the production of highly dispersant graft copolymers by graft polymerization is that graft polymerization requires relatively small amounts of expensive polar graft monomers. A significant disadvantage to some graft polymerization processes, however, is that residual ungrafted polar nitrogenous monomer may cause objectionable odor or toxicological effects such as eye irritation, skin sensitization, poisoning through skin absorption, etc., as well as damage to equipment.

Several techniques are known for eliminating or reducing the amount of residual polar monomer. Illustrative of these techniques is hydrogenation as shown in US-A-4,427,821. The hydrogenation technique of US-A-4,427,821, although it may reduce the amount of residual polar monomer, may produce a material which, in terms of toxicological effects, is equally harmful as, or even more harmful than, the original materials containing the residual polar monomers, and which may lead to possible degradation of machine parts. Moreover, hydrogenation can be extremely expensive.

As an alternative to hydrogenation, vacuum distillation may be used to eliminate residual polar monomers. An example of vacuum distillation is shown in US-A-4,146,498. Vacuum distillation processes, however, have several drawbacks in that expensive equipment is required. Moreover, it is necessary to dispose of the waste material removed by the distillation process. Vacuum distillation also may adversely affect the product properties of the resultant copolymer.

A need therefore exists for graft copolymers, particularly with nitrogenous monomers, and methods for their preparation, that avoid the drawbacks of the prior art.

We have now found hybrid copolymers comprising graft copolymers of nitrogenous monomers on a polymeric substrate and random nitrogenous copolymers, which may be used as viscosity index improvers and which show unexpectedly superior dispersant properties in multigrade lubricating oils for use in internal combustion engines. In particular, multigrade lubricating oils which include the hybrid graft polymers of the invention show unexpectedly superior performance in large diesel engines. Lubricating oils which contain the hybrid graft copolymers of the invention also show a surprisingly reduced tendency to chemically attack the components of internal combustion engines.

The nitrogenous graft copolymer has improved performance in internal combustion engines and comprises a polymeric substrate onto which is grafted one or more nitrogenous monomers, and wherein:
(a) the polymeric substrate comprises units of one or more vinyl monomers, for example a mixture of vinyl monomers, and, optionally units of one or more olefin monomers or olefin copolymer;
(b) the nitrogenous monomer(s) is/are selected from vinylpyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, acrylamides, methacrylamides, dimethylaminoethylmethacrylate, dimethylaminoethylacrylate, N-vinylcarbazole, N-vinylsuccinimide, acrylonitrile, o-, m- and p-aminostyrene, maleimide, n-vinyloxazolidine, N,N-dimethylaminoethylvinylether, ethyl-2-cyanoacrylate, N-vinylphthalimide, N-vinylbenzyldimethylamine, N-methacryloxyethylmorpholine, and N-maleimide of dimethylaminopropylamine.

The method of producing the nitrogenous graft copolymers comprises:-
(a) polymerization of one or more vinyl monomer, optionally together with one or more olefin monomer or copolymer, to produce a polymeric substrate that constitutes at least ninety one percent, for example at least ninety three percent, conversion of monomer to polymer; and
(b) graft polymerizing, onto the polymeric substrate and in the presence of a free radical initiator capable of hydrogen abstraction, one or more polymerizable nitrogenous monomer selected from vinyl pyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, acrylamides, methacrylamides, dimethylaminoethylmethacrylate, dimethylaminoethylacrylate, N-vinylcarbazole, N-vinylsuccinimide, acrylonitrile, o- ,m- and p-aminostyrene, maleimide, N-vinyl oxazolidine, N,N-dimethylaminoethylvinylether, ethyl-2-cyanoacrylate, N-vinylphthalimide, N-vinylbenzyldimethylamine, N-methacryloxyethylmorpholine, and N-maleimide of dimethylaminopropylamine.

In one embodiment of the method of producing the nitrogenous graft copolymers of the invention step (a) comprises polymerizing a first portion of the vinyl monomer(s) and, if used, the olefin monomer(s) or copolymer(s), while adding a second portion of the vinyl monomer(s) and, if used, the olefin monomer(s) or copolymer(s), to the first portion to polymerize both the first and second portions to form the polymeric substrate. Thereafter, a nitrogenous monomer is grafted onto the polymeric substrate.

The present invention is directed to hybrid copolymers of a nitrogenous graft copolymer with nitrogenous random copolymers and to their methods of preparation. The hybrid copolymers may, for example, be prepared by
(a) polymerizing one or more vinyl monomer(s), optionally together with one or more olefin monomers or olefin copolymer, to form a polymeric substrate;
(b) graft polymerizing one or more polymerizable nitrogenous monomers onto the polymeric substrate to form a polymer product and residual polymerizable nitrogenous vinyl monomer(s); and
(c) adding one or more vinyl monomers to the product of step (b) to react with the residual polymerizable nitrogenous monomer(s) to provide the hybrid copolymer product. The polymerization in step (a) may, for example, be effected by polymerizing a first portion of the vinyl monomer(s), and, if used, the olefin monomer(s) or copolymer(s), while adding a second portion of the vinyl monomer(s) and, if used, the olefin monomer(s) or copolymer(s), to form the polymeric substrate.

For convenience, the vinyl monomer(s), and optional olefin monomer(s) and olefin copolymer(s), used in the production of the polymeric substrate, will be referred to as the "constituent monomer(s)".

The manufacture of the nitrogenous graft copolymers of this invention generally entails the addition of a nitrogenous monomer to a reaction solution, within a reaction solvent, of the constituent monomer(s) forming the polymeric substrate. For example, a first portion of the constituent monomer(s) may be polymerized in the reaction solution while adding a second portion of the constituent monomer(s) to form the polymeric substrate. Thereafter, the nitrogenous monomer is grafted onto the polymeric substrate. The relative amounts of the first and second portions employed to form the substrate may vary over a wide range. For example, the first portion may vary from greater than zero to less than 100 percent of the constituent monomer(s). Similarly, the manner of addition of the second portion may be varied. For example, the second portion may be added in the form of a single addition or added over an extended period of time. Alternatively, the constituent monomer(s) used to form the polymeric substrate may be added as a single addition. For example, a reaction mixture may be prepared comprising the reaction solvent and constituent monomer(s), and subsequently polymerizing the constituent monomer(s), or the constituent monomer(s) may be added to the reaction solvent as a single addition or over a period of time.

There is no limitation as to the compositions of the polymeric substrate which may be employed in the invention. Preferably, however, the substrate polymers are formed by polymerization of constituent monomer(s) in the presence of a free radical polymerization initiator. Monomers suitable for polymerization into the polymeric substrate include acrylates, methacrylates, styrene, styrene derivatives, maleates, fumarates, and maleic anhydrides followed by functionalization of the anhydride. Accordingly, polymers formed from, for example, mixtures of acrylates with methacrylates, styrene with acrylates, styrenes with methacrylates, styrene derivatives with acrylates, styrene derivatives with methacrylates, olefin copolymers with acrylates or olefin copolymers with methacrylates may be employed as the polymeric substrate.

Polymerization of the constituent monomer(s) may be initiated by a polymerization initiator in the reaction solution that effects free radical polymerization. The polymerization initiators which may be employed may be selected from a wide variety of compositions. For example, polymerization initiators may be selected from the general classes of peroxides, hydroperoxides, peroxyesters and peroxycarbonates.

The principal requirement for the polymeric substrate employed in the graft copolymer is that the substrate be formed from polymerization, hereinafter referred to as "conversion", of a high percentage of the constituent monomer(s). Typically, at least about 91% of the constituent monomer(s) is/are converted into polymer prior to grafting. Preferably, at least about 93% of the constituent monomer(s) is/are converted to polymer. Most preferably, at least about 94% of the constituent monomer(s) is/are converted into polymer. Polymerizing a high percentage of the constituent monomer(s) appears to assure that a high percentage of the resultant polymeric substrate will have been grafted by the nitrogenous monomer(s), hereinafter referred to as "active fraction". Achieving a high active fraction appears necessary to provide multigrade lubricating oils that provide the required dispersancy for providing the improved performance in internal combustion engines.

Grafting is performed by adding one or more nitrogenous graft monomer to the polymeric substrate within the reaction solution in the presence of a graft initiator capable of hydrogen abstraction. The amount of the nitrogenous graft monomer(s) which may be added to the reaction solution is limited by the need to retain solubility of the resultant grafted polymer in lubricating oil. Typically, up to about 6% of the nitrogenous monomer(s), based on the amount of constituent monomer(s) employed to form the polymeric substrate, may be added to the reaction solution. Preferably, about 2.5 to 3.5% of nitrogenous monomer is added to the reaction solution.

A variety of graft initiator materials may be employed. Any free radical source capable of hydrogen abstraction or addition to unsaturation in the substrate may be used as the graft initiator. Examples of graft initiators suitable for use in the invention include alkylperoxyesters, dialkyl peroxides, such as di-t-butylperoxide; alkyl hydroperoxides such as t-butylhydroperoxide, diacyl peroxides, t-butylperoctoate, cumenehydroperoxide, benzoylperoxide, t-butylperoxyisopropylcarbonate; t-butylperacetate; t-butylperoctoate; t-butylperbenzoate; 2-t-butylazo-2-cyanopropane; di-cumylperoxide; and 1,1-di-t-butylperoxy-3,5,5-trimethylcyclohexane. Preferred graft initiator materials include peresters, percarbonates, diaroyl peroxides, alkyl hydroperoxides, diacyl peroxides, peroxycarbonates, peroxyketals, dialkylperoxides, and azo compounds. Most preferably, a perester such as t-butylperoctoate (t-BPO) or t-butylperbenzoate (t-BPB) is employed as the graft initiator. The amount of graft initiator employed depends on the specific properties of the initiator, for example, the manner in which the initiator decomposes. Typically, the amount of graft initiator constitutes 0.1 to 1% by weight of the sum total of the graft monomer(s) and the constituent monomer(s) of the polymeric substrate.

The graft initiator is usually added directly into the reaction solution after addition of the graft monomer(s). Alternatively, the graft initiator may be added as part of a mixture of an additional solvent of a different composition from that of the reaction solvent. The choice of this additional solvent depends on miscibility with the reaction solution and the ability of the reaction solvent to dissolve the graft initiator.

The preferred nitrogenous monomer which is grafted onto the polymeric backbone is 2-vinylpyridine (2-VP). However, other polar C-vinylpyridines or other polar nitrogen-containing vinyl monomers may be grafted. Suitable other nitrogenous monomers for serving as grafts include: vinyl pyridines, such as 4-vinylpyridine and 2-methyl-5-vinylpyridine, vinylpyrroles, vinylindoles, vinylquinolines, vinylisoquinolines, vinylacridines, vinylpyrazines, vinylpyrimidines, vinyl pyridazines, vinylimidazoles, vinylthiazoles, dimethylaminoethylmethacrylate, dimethylaminoethylacrylate, N-vinylcarbazole, N-vinylsuccinimide, acrylonitrile, o-, m-, or p-aminostyrene, maleimide, N-vinyl oxazolidone, N,N-dimethylaminoethylvinylether, ethyl 2-cyanoacrylate, N-vinylphthalimide, 2-vinylquinoline, a variety of acrylamides and methacrylamides such as N-1,1-dimethyl-3-oxobutylacrylamide, N-1,2-dimethyl-1-ethyl-3-oxobutyl acrylamide, N-(1,3-diphenyl-1-methyl-3-oxopropyl)acrylamide, N-(1-methyl-1-phenyl-3-oxobutyl) methacrylamide, N,N-diethylaminoethylacrylamide, 2-hydroxyethylacrylamide, and N-methacrylamide of aminoethylethyleneurea, N-vinylbenzyldimethylamine, N-dimethylaminopropylacrylamide, N-dimethylaminopropylmethacrylamide, N-methacryloxyethylmorpholine, and N-maleimide of dimethylaminopropylamine. Also a variety of N-vinyl lactams or their thio-analogues such as N-vinylcaprolactam, N-vinylpyrrolidone (1-vinyl-2-pyrrolidone), N-vinylthiopyrrolidone, 3-methyl-1-vinyl pyrrolidone, 3-ethyl-1-vinylpyrrolidone, 3-butyl-1-vinylpyrrolidone, 3,3-dimethyl-1-vinylpyrrolidone, 4,5-dimethyl-1-vinylpyrrolidone, 5,5-dimethyl-1-vinylpyrrolidone, 3,3,5-trimethyl-1-vinylpyrrolidone, 4-ethyl-1-vinylpyrrolidone, 5-methyl-5-ethyl-1-vinylpyrrolidone, or 3,4,5-trimethyl-3-ethyl-1-vinylpyrrolidone may be grafted. Although monomers containing nitrogen as the only hetero-atom are most preferred, polar monomers containing other hetero-atoms such as phosphorus, sulfur, or oxygen, which may provide useful properties in addition to dispersancy, also may be usefully employed as graft monomers.

Grafting of the nitrogenous monomer(s) may be performed over a temperature range of 25°C to 160°C. Preferably, grafting is accomplished at a temperature of 110°C to 130°C. The specific temperature employed depends in part upon the graft initiator and upon factors such as the specific monomer(s) to be grafted, and the reaction solvent. The specific temperature employed during grafting also depends on the half life of the graft initiator. As used hereinafter, "half life" means the time required for one half of the amount of graft initiator present in the reaction to decompose. Graft initiators with half-lives of 1 to 60 minutes may be utilized. Preferably, graft initiators with half lives of 20 to 40 minutes are employed. The selection of the appropriate graft initiator and the temperature range are made so that free radicals are not produced too rapidly during formation of the mixture of reactants.

The choice of grafting temperature is also influenced by the viscosity of the reaction solution. The viscosity of the reaction mixture generally limits the useful amounts of polymer solids in the reaction solution at which the grafting reaction can be performed. In general, as the grafting temperature increases, the viscosity of the reaction solution decreases and the amount of polymer solids which may be grafted increases.

The graft initiator may, for example, be added to the reaction solution, as a single discrete addition or as a series of 2 to 8 discrete additions, after addition of the nitrogenous graft monomer(s). Preferably, about 3 to 4 additions of graft initiator are employed. As an alternative to adding the graft initiator as a single discrete addition or in a series of discrete additions, the graft initiator may be added continuously over a period of time. The time period during which the graft initiator is added depends on process time limitations and the half life of the initiator.

The solvent medium for the preparation of the graft copolymer may, for example, be selected from petroleum-based mineral oils, synthetic lubricating oils and other organic solvents. For example, any inert, nonreactive aliphatic or aromatic hydrocarbon-based mineral oil may be used as the reaction solvent medium provided that the graft monomer and the polymer components are soluble in the oil and that the oil is pure enough so as not to interfere with polymerization. Preferably, the reaction solvent is a low molecular weight saturated oil. Examples of low molecular weight saturated oils suitable for use as reaction solvents include hydro refined 100N or 150N oils and poly-alpha olefins. Examples of suitable organic solvents include chlorobenzene, o-dichlorobenzene, benzene, cyclohexane, toluene, xylene, ethylene dichloride, and esters such as ethyl propionate or butylacetate. Still other solvents may be employed, as would be apparent to those skilled in the art.

The present invention will now be further illustrated by way of the following Examples which are for illustrative purposes only an are not to be construed as imposing any limitation on the scope of the invention.

### Example 1. Preparation of a 2-vinylpyridine graft to a polymethacrylate substrate from a 2% by weight charge of 2-vinylpyridine

A polymethacrylate substrate polymer was prepared from a monomer mix of 4,378 parts of isomeric C10 alkyl methacrylates of about 98% purity, 2,416 parts of C16 to C20 alkyl methacrylates of about 95% purity, 765 parts of methylmethacrylate of about 100% purity, 375 parts of a reaction solvent of 100N oil having a bromine number of less than 12, 11.48 parts of t-amylperoctoate (98% purity) and 9 parts of dodecyl mercaptan.

A first portion of 30% of the monomer mixture was added to a nitrogen flushed reactor. This first portion was heated to a polymerization temperature of 110°C whereupon the remainder of the monomer mixture was gradually added over about 50 minutes to the reactor. Thirty minutes after the remainder of the monomer mixture was added, a first discrete addition of a polymerization initiator of 3.83 parts of t-amylperoctoate (98% purity) in 375 parts of 100N oil having a Br number of less than 12 was added. A second discrete addition of this same polymerization initiator composition was added 30 minutes later. About 30 minutes after the second discrete addition of polymerization initiator, a sample of the resultant polymeric substrate material was removed to measure the extent of conversion of the monomer(s) into polymethacrylate substrate. The extent of conversion was found to be about 92.7%. Subsequently, about 150 parts of a graft monomer of 2-vinylpyridine of about 100% purity was added to the reactor whereupon the temperature was increased to about 120°C.

Grafting of the 2-vinylpyridine monomer onto the polymethacrylate substrate was accomplished by adding four discrete additions of a graft initiator composition of 6.62 grams of t-butylperbenzoate (t-BPB) (85% concentration in xylenes) in 375 grams of the 100N oil of bromine number of less than 12 at 20 minute intervals. Forty minutes after the last addition of graft initiator, 6372 grams of the 100N oil was added to reduce the viscosity of the product. The resultant graft copolymer of 2-vinylpyridine on polymethacrylate contained 0.65 wt. % 2-vinylpyridine. This corresponds to about 0.086 percent basic nitrogen (%N_{b}) within the graft copolymer product. The graft copolymer had an active fraction of about 62.7%.

As used herein, percent basic nitrogen (% N_{b}) is a measure of the amount of nitrogenous monomer in the graft copolymer molecule. The (% N_{b}) appears to depend on the amount of nitrogenous monomer charged, the percent conversion of the constituent monomer(s) prior to grafting of the nitrogenous monomer and the amount of graft initiator. The (% N_{b}) can be determined from the amount of nitrogen titratable by perchloric acid in acetic acid in accordance with method ASTM D-974.

The amount of basic nitrogen in the graft portion of the grafted copolymer is a function of the extent of conversion of the constituent monomer(s) and the amount of nitrogenous monomer charged during the grafting step. For example, a 4.3% basic nitrogen content in the graft portion of the copolymer has been attained by adding 2% by weight of 2-VP to a polymethacrylate substrate that represents 95.7% conversion of constituent monomer(s). Similarly, a 4.3% basic nitrogen content in the graft portion of the copolymer has been attained by adding 3% by weight of 2-vinylpyridine to a polymeric substrate that represents 93.6% conversion of constituent monomer(s).

### Example 2. Preparation of a 2-vinylpyridine graft onto a polymethacrylate substrate copolymer from a 3% by weight charge of 2-vinylpyridine

A polymethacrylate substrate was prepared from a monomer mix of 4332 parts of isomeric C10 alkyl methacrylates, 2392 parts of C16 to C20 alkyl methacrylates, 758 parts of methylmethacrylate, 375 parts of 100N oil of less than 12 bromine number, 11.48 parts of t-amylperoctoate (98% pure) and 9 parts of n-dodecylmercaptan. Thirty percent of this monomer mixture was added to a nitrogen-flushed reactor which was heated to 110°C while stirring. The remainder of the monomer mixture was added over about 50 minutes. Thirty minutes after adding the remaining monomer mixture, a discrete addition of a polymerization initiator composition of 3.83 parts of t-amylperoctoate in 375 parts of the same low bromine number 100N oil was added to the reactor. A second addition of this same initiator composition was added 30 minutes later. Thirty minutes after the second addition of polymerization initiator, a sample of the resulting polymeric substrate was removed for determination of the extent of conversion of the monomers into polymer. The extent of conversion was found to be about 96%. 2-vinylpyridine monomer was then charged to the reactor whereafter the temperature was increased to about 120°C. The amount of the 2-vinylpyridine monomer added was about 3% by weight of the total monomers (including 2-vinylpyridine).

Grafting of the 2-vinylpyridine was accomplished by adding 4 discrete additions of a graft initiator of 8.82 parts of t-butylperbenzoate (85% concentration in xylenes) in 375 parts of the low bromine number 100N oil at 20 minute intervals. About 40 minutes after the last addition of graft initiator, about 5800 parts of the 100N oil was added to reduce the viscosity. The final graft copolymer contained about 0.145% N_{b}, corresponding to 1.09% 2-vinylpyridine in the graft copolymer. The active fraction was 75.6%.

### Example 3. Preparation of a 2-vinylpyridine graft onto a polymethacrylate substrate from a 3.5% by weight charge of 2-vinylpyridine

Using the procedure of Example 1, a monomer mixture of about 4309 parts of isomeric C10 alkylmethacrylates, 2380 parts of C16 to C20 alkyl methacrylates, 754 parts of methylmethacrylate, 375 parts of 100N oil bromine number less than 12, 11.48 parts of t-amylperoctoate, and 9 parts of n-dodecylmercaptan was polymerized into a polymethacrylate substrate. The polymethacrylate substrate represented conversion of 94.4% of the monomers. About 262.5 parts of 2-vinylpyridine, that is, about 3.5% by weight of the total monomers (including the 2-vinylpyridine), was grafted by the procedure of Example 1 wherein 4 discrete additions of a graft initiator of 4.41 parts of t-butylperbenzoate (85% concentration in xylenes) in 375 parts of this same low bromine number of 100N oil was employed. The graft copolymer contained 0.102% (N_{b}), corresponding to 0.77% 2-vinylpyridine in the graft copolymer , and had an active fraction of 63.5%.

### Example 4. Preparation of a 2-vinylpyridine graft onto a polymethacrylate substrate from 4.5% by weight charge of 2-vinylpyridine.

Following the procedure of Example 1, a polymethacrylate substrate was prepared by conversion of about 94.5% of the monomers. 337.5 parts of 2-vinylpyridine was then grafted onto this substrate. The resultant graft copolymer contained 0.142% (N_{b}), corresponding to 1.07 wt.% 2-vinylpyridine and had an active fraction of 63.1% after homogenization to a shear stability index of 41.2.

### Example 5. Preparation of a 2-vinylpyridine graft onto a styrene/polymethacrylate copolymer from a 2% by weight charge of 2-vinylpyridine

A styrene/polymethacrylate copolymer substrate was formed from a monomer mixture of 6345 parts of isomeric C10 methacrylates, 1103 parts of styrene, and 8.81 parts of t-butylperbenzoate (85% concentration in xylenes). This mixture was added to a nitrogen-flushed reactor and polymerization was initiated by heating to 120°C while stirring. After about one hour, a discrete addition of polymerization initiator of 4.41 parts of t-butylperbenzoate (85% concentration in xylenes) in 225 parts of 100N oil of bromine number less than 12 was added to the reactor. One hour later, a second identical addition of the polymerization initiator was added. After about 15 minutes, an exotherm occurred which raised the reaction temperature to about 132°C. Twenty minutes after the second addition of polymerization initiator, about 375 parts of the 100N low bromine number oil was added to reduce viscosity and to improve stirring. Forty minutes after the addition of this low bromine number oil, a second addition of 375 parts of the oil was added. Ten minutes after the second addition of oil, a third addition of 375 parts of the oil was added. A third addition of the polymerization initiator was added 5 minutes after the third addition of oil. One hour after the third addition of polymerization initiator, 150 parts of 2-vinylpyridine monomer was added. A final addition of 375 parts of the low bromine number oil was added 30 minutes after the addition of the 2-vinylpyridine.

The first of 3 discrete additions of graft initiator of 8.81 parts of t-butylperbenzoate (85% concentration in xylenes) in 375 parts of the low bromine number oil was then added 30 minutes after completion of the addition of the oil. The remaining second and third additions of the graft initiator were added at 30 minute intervals. The resultant graft copolymer contained 0.115% (N_{b}), corresponding to 0.86 wt.% 2-vinylpyridine. The graft copolymer had an active fraction of 39.2% after homogenization of a shear stability index of 37.8.

When the graft copolymer products of the invention are employed in multigrade lubricating oils, it appears that the ability of the multigrade lubricating oils to control deposits on pistons of diesel engines varies with the percentage of basic nitrogen in the graft portion of the graft copolymer. Graft copolymer products with basic nitrogen contents of from about 3.8 to 6.0% in the graft portion of the copolymer, preferably from about 4.3 - 5.5%, have been found to provide lubricating oils which show unexpectedly improved cleanliness in large diesel engines.

Lubricating oils which include the graft copolymers of the invention exhibit surprisingly improved performance compared to other types of nitrogenous graft copolymers when employed in internal combustion engines. The increase in performance is particularly surprising when oils which employ the graft copolymers of the invention are employed in diesel engines. This is illustrated by the following comparative example wherein the performance of a graft copolymer of N-vinylpyrrolidone on polymethacrylate made in accordance with US-A-3,506,574 is compared with a graft copolymer of 2-vinylpyridine on polymethacrylate of the present invention.

### Comparative Example

In accordance with US-A-3,506,574, a graft copolymer of N-vinylpyrrolidone on polymethacrylate was manufactured from a 3% charge of N-vinylpyrrolidone monomer. The resultant graft copolymer was incorporated into SAE 5W-30 grade oil which contained 9.8% of Amoco Corporation PC6-006 detergent/inhibitor package and subjected to the Caterpillar Corporation 1H2 test developed by Caterpillar Corp., Peoria, IL. Similarly, a graft copolymer of 2-vinylpyridine on polymethacrylate, made in accordance with Example 2 above, was incorporated into SAE 5W-30 grade oil which contained 9.8% of Amoco PC6006 detergent inhibitor package and subjected to the Caterpillar Corporation 1H2 test. The results of the performance of these graft copolymers are given below:

| Caterpillar 1H2 Test Results | | | | |
|---|---|---|---|---|
| | 240 Hours | | 480 Hours | |
| Polymer type | % TGF | WTD | %TGF | WTD |
| N-VP on PMA | 72 | 157.2 | 70 | 169.1 |
| 2-VP on PMA | 39 | 80.0 | 36 | 95.8 |
| 2-VP = 2-vinylpyridine N-VP - N-vinylpyrrolidone PMA = polymethacrylate %TGF = % top groove filing of engine piston WTD = weighted total demerits | | | | |

The results of the Caterpillar 1H2 test, as indicated by the change in the %TGF, indicate that a graft copolymer of 2-vinylpyridine on polymethacrylate shows surprisingly improved performance in large diesel engines relative to graft copolymers of N-vinylpyrrolidone on polymethacrylate. The TGF, as discussed in US-A-3,951,831, which is hereby incorporated by reference, and the WTD are measures of the performance of the polymer additive in lubricating oil. As shown above, the % TGF when a graft copolymer of 2-vinylpyridine on polymethacrylate is used is about one half of the %TGF when a graft copolymer of N-vinylpyrrolidone on polymethacrylate is used. Similarly, the WTD achieved with use of 2-vinylpyridine is substantially less than the WTD achieved with N-vinylpyrrolidone. These substantial reductions in top groove filing and weighted total demerits indicate the surprising performance of graft copolymers of 2-vinylpyridine on polymethacrylate.

During formation of the nitrogenous graft copolymeric materials, 100% of the nitrogenous monomer(s) may not always graft onto the polymeric substrate. Residual nitrogenous monomer(s) therefore may be present within the reaction solution. Reducing the amount of the residual nitrogenous monomer(s) is desirable to minimize the possibility of damage to equipment, such as, for example, the flourocarbon seals of internal combustion engines, caused by exposure to the residual nitrogenous monomer.

The amount of the residual nitrogenous monomer(s) may be reduced by adding additional quantities of polymerizable vinyl monomer(s) to copolymerize with the residual nitrogenous monomer(s). The resultant product is a hybrid copolymer of a nitrogenous graft copolymer formed during the grafting process in combination with a random copolymer of the residual nitrogenous monomer(s) and the additional polymerizable vinyl monomer(s). The amount of residual nitrogenous monomer(s) that remains after formation of these hybrid graft copolymers is surprisingly low. Typically, the amount of residual nitrogenous monomer(s) is less than about 2,000, and often less than 500, parts per million of hybrid copolymer.

The procedure for producing the hybrid copolymer initially entails forming a graft copolymer by grafting nitrogenous monomer(s) onto a polymer substrate formed from a first portion of constituent monomer(s) that has under gone a high degree of conversion. After formation of the graft copolymer, a subsequent portion of the same constituent monomer(s) or, alternatively, different polymerizable monomer(s) is added to compolymerize with any residual nitrogenous monomer(s) to provide the hybrid copolymer. The amount of constituent monomer(s) used in the first portion to form the graft copolymer, as a percentage of the total amount of constituent monomer(s) available to form the hybrid copolymer, is not critical. Accordingly, the first portion may range from 1 to 99% of the total amount of constituent monomer(s) available to form the hybrid copolymer. Illustrative Examples showing production of hybrid copolymers are given in Examples 6 to 8 below.

### Example 6. Preparation of a hybrid copolymer of a graft polymer of a 2-vinylpyridine graft onto a polymethacrylate substrate from a 3% by weight charge of 2-vinylpyridine with a random copolymer of 2-vinylpyridine and methacrylate

A polymethacrylate substrate was prepared from 68.8% of the total monomer mixture available for providing the hybrid polymer. This corresponds to 647.9 parts of isomeric C10 alkyl methacrylates, 357.7 parts of C16-20 alkyl methacrylates, 113.2 parts of methyl methacrylate, 55 parts of 100N oil of bromine number of less than 12, 1.33 parts of n-dodecylmercaptan, and 1.70 parts of t-amylperoctoate (98% purity). A first portion of 30 percent of the monomer mixture available for providing the polymethacrylate substrate was charged into a nitrogen-flushed flask fitted with a thermometer and thermowatch to control temperature, a water-cooled reflux condenser with a nitrogen outlet, a C-stirrer, a nitrogen inlet and a monomer feed line. The flask contents were heated to 110°C whereafter the remaining monomer mixture was added over a 50 minute period. Thirty minutes after adding the remaining monomer mixture, a first discrete addition of polymerization initiator of 0.56 parts of t-amylperoctoate (85% concentration in xylenes) in 55 parts of oil of bromine number of less than less than 12 was added. Thirty minutes later, a second discrete addition of this same polymerization initiator was added. Thirty minutes after the second addition of polymerization initiator, a sample was analyzed to measure the extent of conversion of the monomer(s) into the polymethacrylate substrate. The extent of conversion was 95.1%. Thereafter, 2-vinylpyridine was added to the reactor, the amount of 2-vinylpyridine added being 3% by weight of the total monomers (including 2-vinylpyridine). The temperature was then increased to 120°C and the first of four discrete additions of a graft initiator composition of 1.7 parts of t-butylperbenzoate (98% purity) in 13.9 parts of oil was added. The remaining three additions of graft initiator were added at 20 minute intervals. Forty minutes after the last addition of graft initiator, a small sample of the resultant graft copolymer of 2-vinylpyridine on a polymethacrylate substrate was removed to measure the %N_{b} and active fraction. The %N_{b} and the active fraction were 0.113% and 75.2%, respectively.

After formation of the graft copolymer, the remaining 31.1% of the monomers available for forming the hybrid polymer was added to the graft copolymer in the reactor. This corresponds to 291.6 parts of isomeric C10 methacrylates, 161 parts of C16 to C20 alkyl methacrylates, and 51.3 parts of methylmethacrylate. The temperature was then lowered to 105°C and a polymerization initiator of 3.14 parts of t-butylperbenzoate (98% purity) in 12.6 parts of oil of bromine number of less than 12 was added over a period of about one hour to initiate random copolymerization of the added second monomer mixture with any residual 2-vinylpyridine remaining after formation of the graft copolymer. Forty minutes after addition of the polymerization initiator, the resultant hybrid copolymer was diluted with 150 parts of the 100N oil in order to reduce the viscosity.

The amount of residual nitrogenous monomer in the hybrid copolymer product was determined by titration of an aliquot of the dialysate (an n-heptane solution containing materials which pass through a rubber membrane used to determine polymer solids) with perchloric acid and acetic acid. The amount of residual 2-vinylpyridine was found to be about 1,690 parts per million of hybrid polymer. This represents an unexpected substantial reduction from the 6000 parts per million of 2-vinylpyridine usually found in 2-vinylpyridine nitrogenous graft copolymers.

### Example 7. Preparation of a hybrid copolymer of a graft of N-vinylpyrrolidone on a polymethacrylate substrate from a 4% by weight charge of N-vinylpyrrolidone with a random copolymer of N-vinylpyrrolidone and methacrylate

A monomer mixture for a polymethacrylate substrate was prepared from 412.2 parts of dodecylpentadecyl methacrylates (DPMA), C12 to 15 methacrylates, 61.6 parts of methyl methacrylate, 45 parts of 100N oil of a Br number of less than 12, 0.65 parts of benzoyl peroxide, 2.8 parts of di-t-butylperoxide, and 1.75 parts of n-dodecylmercaptan. A first portion of twenty five percent of this monomer mixture (131 parts) was charged to a nitrogen-flushed flask fitted with a thermometer, a temperature control device, and a water-cooled reflux condenser with a nitrogen outlet, a C-stirrer, a nitrogen inlet and a monomer feed line. The first portion of monomers was heated to about 115°C. The reminder of the monomer mixture was then added over a 60 minute period while maintaining a temperature of 120°C. After the remaining monomer mixture was added, a graft initiator composition of 3.4 parts of diisopropylbenzenehydroperoxide (DIBHP), 50% in diisopropylbenzene, was added. Three minutes later, 3.4 parts of Empigen (a quaternary ammonium chloride as a 33% solution in 2-ethylhexanol) for promoting free radical decomposition of DIBHP was added. The reaction mixture was then held for 10 minutes at 120°C after which 4% (26.3 parts) of N-vinylpyrrolidone was added. The mixture was maintained at 130°C for an additional 15 minutes and then a second addition of graft initiator of 3.4 parts of DIBHP was added to form the graft copolymer. Three minutes later 3.4 parts of Empigen was added. The mixture was maintained at 120°C for an additional 60 minutes and a second monomer mixture of 137.4 parts of C12 to C15 methacrylates, 20.5 parts of methylmethacrylate, 15 parts of oil of bromine number of less than 12, 0.22 parts of benzoylperoxide, 0.93 parts of di-t-butylperoxide, and 0.58 parts of n-dodecyl mercaptan was added over a 20 minute period while maintaining a temperature of 120°C. Thereafter, a polymerization initiator of 3.4 parts of DIBHP was added. About 222 parts of the low bromine number 100N oil and 3.4 parts of Empigen were then added at 3 minute intervals. The entire mixture was held for 60 minutes at 128°C and then cooled to form a hybrid copolymer of a N-vinylpyrrolidone graft polymethacrylate copolymer with a random copolymer of N-vinylpyrolidone with methacrylate.

Lubricating oils which employ the hybrid copolymers of the invention show a surprisingly decreased reactivity towards the components of internal combustion engines. In particular, lubricating oils which employ hybrid copolymers formed from N-vinylpyrrolidone grafts such as set forth in Example 7 show a surprisingly decreased reactivity towards fluorocarbon seals of internal combustion engines.

The graft copolymer products of this invention may be used in a wide variety of lubricant base stocks as well as in other applications where their superior dispersancy or viscosity-temperature control properties are of value. Possible lubricant base stocks which may include the products of the invention include oils of both mineral (petroleum) and synthetic origin. The lubricants containing the products of this invention may also include other additives to provide additional dispersancy, viscosity-temperature control, pour point depressancy, high temperature detergency, rust inhibition, anti-wear agents, antioxidants, extreme pressure agents, friction modifiers, anti-foam agents or dyes.

## Claims

1. A method of preparing a hybrid copolymer of a nitrogenous graft copolymer and a nitrogenous random copolymer, which comprises:-
(a) polymerizing one or more vinyl monomers, optionally together with one or more olefin monomers or olefin copolymer, to form a polymeric substrate;
(b) graft polymerizing one or more polymerizable nitrogenous monomers onto the polymeric substrate to form a polymer product and residual polymerizable nitrogenous monomer(s); and
(c) adding one or more vinyl monomers, optionally together with one or more olefin monomers or copolymer, to the product of step (b) to react with the residual polymerizable nitrogenous monomer(s) to provide the hybrid copolymer product.

2. A method as claimed in claim 1, wherein step (a) comprises polymerizing a first portion of the vinyl monomer(s) and, if used, the olefin monomer(s) or copolymer(s), while adding a second portion of the vinyl monomer(s) and, if used, the olefin monomer(s) or copolymer(s), to said first portion.

3. A method as claimed in claim 1 or claim 2, wherein the vinyl monomer(s) in step (a) is/are selected from acrylates, methacrylates, styrene, styrene derivatives, maleates, fumarates, and maleic anhydride followed by functionalization of the anhydride.

4. A method as claimed in any of claims 1 to 3, wherein the polymeric substrate, in step (a), is formed from a mixture of vinyl monomers.

5. A method as claimed in any of claims 1 to 4, wherein the graft polymerization, in step (b), is performed in the presence of a free radical initiator, for example an initiator selected from peresters, percarbonates, diaroyl peroxides, dialkyl peroxides, alkyl hydroperoxides, peroxycarbonates, peroxyketals, diacyl peroxides, and azo compounds.

6. A method as claimed in any of claims 1 to 5, wherein the polymerizable nitrogenous monomer(s) is/are selected from vinyl pyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, vinyllactams and their thio analogues, acrylamides, methacrylamides, dimethylaminoethylmethacrylate, dimethylaminoethylacrylate, N-vinylcarbazole, N-vinylsuccinimide, acrylonitrile, o-, m- and p-aminostyrene, maleimide, N-vinyloxazolidine, N,N-dimethylaminoethylvinylether, ethyl-2-cyanoacrylate, N-vinylphthalimide, N-vinylbenzyldimethylamine, N-methacryloxyethylmorpholine, and N-maleimide of dimethylaminopropylamine.

7. A method as claimed in claim 6, wherein the polymerizable nitrogenous monomer(s) is/are selected from 2-vinylpyridine and N-vinylpyrrolidone.

8. A method as claimed in any of claims 1 to 7, wherein the amount of residual polymerizable nitrogenous monomer(s), after step (c), is less than about 2,000 parts per million of the hybrid copolymer, for example less than 500 parts per million of the hybrid copolymer.

9. A method as claimed in any of claims 1 to 8, wherein the polymerizable nitrogenous monomer(s) comprises polymerizable nitrogenous vinyl monomer(s).

10. A hybrid copolymer, which comprises a nitrogenous graft copolymer and random copolymer comprising units of one or more vinyl monomers, one or more nitrogenous monomers, and, optionally, one or more olefin monomers or olefin copolymer, and wherein the hybrid copolymer has a residual nitrogenous monomer content of less than about 2,000 parts per million of hybrid copolymer.

11. A hybrid copolymer as claimed in claim 10, wherein
(i) the nitrogenous graft copolymer is 2-vinylpyridine on a polymethacrylate substrate and the random copolymer is 2-vinylpyridine with methacrylate; or
(ii) the nitrogenous graft copolymer includes N-vinylpyrrolidone, and the random copolymer includes N-vinylpyrrolidone with methacrylate.

## Patentansprüche

1. Verfahren zur Herstellung eines Mischcopolymers aus einem stickstoffhaltigen Pfropfcopolymer und einem stickstoffhaltigen statistischen Copolymer, bei dem man:
(a) ein oder mehrere Vinylmonomere, gegebenenfalls gemeinsam mit einem oder mehreren Olefinmonomeren oder Olefincopolymeren, zu einem polymeren Substrat polymerisiert;
(b) auf das polymere Substrat ein oder mehrere polymerisierbare stickstoffhaltige Monomere pfropfpolymerisiert, wobei man ein Polymer-produkt und restliches polymerisierbares stickstoffhaltiges Monomer bzw. restliche polymerisierbare stickstoffhaltige Monomere erhält; und
(c) dem Produkt aus Schritt (b) ein oder mehrere Vinylmonomere, gegebenenfalls gemeinsam mit einem oder mehreren Olefinmonomeren oder Olefincopolymeren, zur Umsetzung mit dem restlichen polymerisierbaren stickstoffhaltigen Monomer bzw. den restlichen polymerisierbaren stickstoffhaltigen Monomeren zusetzt, wobei man das Mischcopolymerprodukt erhält.

2. Verfahren nach Anspruch 1, bei dem man in Schritt (a) eine erste Teilmenge des Vinylmonomers bzw. der Vinylmonomere und gegebenenfalls des Olefinmonomers bzw. der Olefinmonomere oder des Olefincopolymers bzw. der Olefincopolymere unter Zusatz einer zweiten Teilmenge des Vinylmonomers bzw. der Vinylmonomere und gegebenenfalls des Olefinmonomers bzw. der Olefinmonomere oder des Olefincopolymers bzw. der Olefincopolymere zur ersten Teilmenge polymerisiert.

3. Verfahren nach Anspruch 1 oder 2, bei dem man das Vinylmonomer bzw. die Vinylmonomere in Schritt (a) unter Acrylaten, Methacrylaten, Styrol, Styrolderivaten, Maleaten, Fumaraten und Maleinsäureanhydrid mit anschließender Funktionalisierung des Anhydrids auswählt.

4. Verfahren nach einem der Ansprüche 1 bis 3, bei dem man das polymere Substrat in Schritt (a) aus einem Vinylmonomerengemisch herstellt.

5. Verfahren nach einem der Ansprüche 1 bis 4, bei dem man die Pfropfpolymerisation in Schritt (b) in Gegenwart eines radikalischen Initiators, beispielsweise eines unter Perestern, Percarbonaten, Diaroylperoxiden, Dialkylperoxiden, Alkylhydroperoxiden, Peroxycarbonaten, Peroxyketalen, Diacylperoxiden und Azoverbindungen ausgewählten Initiators, durchführt.

6. Verfahren nach einem der Ansprüche 1 bis 5, bei dem man das polymerisierbare stickstoffhaltige Monomer bzw. die polymerisierbaren stickstoffhaltigen Monomere unter Vinylpyridinen, Vinylpyrrolen, Vinylindolen, Vinylchinolinen, Vinylisochinolinen, Vinylacridinen, Vinylpyrazinen, Vinylpyrimidinen, Vinylpyridazinen, Vinylimidazolen, Vinylthiazolen, Vinyllactamen und deren Thioanalogen, Acrylamiden, Methacrylamiden, Dimethylaminoethylmethacrylat, Dimethylaminoethylacrylat, N-Vinylcarbazol, N-Vinylsuccinimid, Acrylnitril, o-, m- und p-Aminostyrol, Maleinimid, N-Vinyloxazolidin, N,N-Dimethylaminoethylvinylether, Ethyl-2-cyanoacrylat, N-Vinylphthalimid, N-Vinylbenzyldimethylamin, N-Methacryloxyethylmorpholin und dem N-Maleinimid von Dimethylaminopropylamin auswählt.

7. Verfahren nach Anspruch 6, bei dem man das polymerisierbare stickstoffhaltige Monomer bzw. die polymerisierbaren stickstoffhaltigen Monomere unter 2-Vinylpyridin und N-Vinylpyrrolidon auswählt.

8. Verfahren nach einem der Ansprüche 1 bis 7, bei dem die Menge an restlichem polymerisierbarem stickstoffhaltigem Monomer bzw. restlichen polymerisierbaren stickstoffhaltigen Monomeren nach Schritt (c) weniger als etwa 2000 ppm, bezogen auf das Mischcopolymer, beispielsweise weniger als 500 ppm, bezogen auf das Mischcopolymer, beträgt.

9. Verfahren nach einem der Ansprüche 1 bis 8, bei dem man als polymerisierbares stickstoffhaltiges Monomer bzw. polymerisierbare stickstoffhaltige Monomere polymerisierbares stickstoffhaltiges Vinylmonomer bzw. polymerisierbare stickstoffhaltige Vinylmonomere (mit)verwendet.

10. Mischcopolymer, das ein stickstoffhaltiges Pfropfcopolymer und ein statistisches Copolymer mit Einheiten aus einem oder mehreren Vinylmonomeren, einem oder mehreren stickstoffhaltigen Monomeren und gegebenenfalls einem oder mehreren Olefinmonomeren oder Olefincopolymeren enthält und einen Restgehalt an stickstoffhaltigem Monomer von weniger als etwa 2000 ppm, bezogen auf das Mischcopolymer, enthält.

11. Mischcopolymer nach Anspruch 10, bei dem
(i) es sich bei dem stickstoffhaltigen Pfropfcopolymer um 2-Vinylpyridin auf einem Polymethacrylat-Substrat und bei dem statistischen Copolymer um 2-Vinylpyridin mit Methacrylat handelt oder
(ii) das stickstoffhaltige Pfropfcopolymer N-Vinylpyrrolidon und das statistische Copolymer N-Vinylpyrrolidon mit Methacrylat enthält.

## Revendications

1. Procédé de préparation d'un copolymère hybride à partir d'un copolymère greffé azoté et d'un copolymère statistique azoté qui comprend :
a) la polymérisation d'un ou plusieurs monomères vinyliques, éventuellement avec un ou plusieurs monomères ou copolymères oléfiniques, pour former un substrat polymère,
b) la polymérisation par greffage d'un ou plusieurs monomères azotés polymérisables sur le substrat polymère pour former un produit polymère et de(s) monomère(s) azoté(s) polymérisable (s) résiduaires (s), et
c) l'addition d'un ou plusieurs monomères vinylique(s), éventuellement avec un ou plusieurs monomère(s) ou copolymère(s) oléfiniques au produit de l'étape (b) pour réagir avec le(s) monomère(s) azoté(s) polymérisable(s) résiduels pour fournir le produit copolymère hybride.

2. Procédé selon la revendication 1,
dans lequel
l'étape a) comprend la polymérisation d'une première partie du ou des monomères vinyliques et, si on en utilise, du (ou des) monomères ou copolymères oléfiniques, tout en ajoutant à la première partie une deuxième partie du ou des monomères vinyliques et, si on en utilise, du ou des monomères ou copolymères oléfiniques.

3. Procédé selon la revendication 1 ou la revendication 2,
dans lequel
le ou les monomères vinyliques dans l'étape (a) est/sont sélectionnés parmi les acrylates, les méthacrylates, le styrène, les dérivés du styrène, les maléates, les fumarates et les anhydrides maléiques avec fonctionnalisation ultérieure de l'anhydride.

4. Procédé selon les revendications 1 à 3,
dans lequel
le substrat polymère à l'étape (a) est formé d'un mélange de monomères vinyliques.

5. Procédé selon les revendications 1 à 4,
dans lequel
la polymérisation par greffage à l'étape (b) est effectuée en présence d'un amorceur par radicaux libres, par exemple un amorceur choisi parmi les peresters, les percarbonates, les peroxydes de diaroyle, les peroxydes de dialkyle, les hydroperoxydes d'alkyle, les peroxycarbonates, les peroxycétals, les peroxydes de diacyle et les composés azo.

6. Procédé selon l'une des revendications 1 à 5,
dans lequel
le ou les monomères azotés polymérisable(s) est ou sont, choisis parmi les vinylpyridines, les vinylpyrroles, les vinylindoles, les vinylquinoléines, les vinylisoquinoléines, les vinylacridines, les vinylpyrazines, les vinylpyrimidines, les vinylpyridazines, les vinylimidazoles, les vinylthiazoles, les vinylactames, et leurs analogues thio, les acrylamides, les méthacrylamides, les méthacrylates de diméthylaminoéthyle, les acrylates de diméthylaminoéthyle, le N-vinylcarbazole, le N-vinylsuccinimide, l'acrylonitrile, l'o-, m-, ou p-aminostyrène, le maléimide, la N-vinyloxazolidine, l'éther N,N-diméthylamino-éthylvinylique, le 2-cyanoacrylate d'éthyle, le N-vinylphtalimide, la N-vinylbenzyldiméthylamine, la N-méthacryloxyéthylmorpholine, et le N-maléimide de diméthylaminopropylamine.

7. Procédé selon la revendication 6,
dans lequel
le ou les monomère(s) azoté(s) polymérisable(s) est ou sont choisis parmi la 2-vinylpyridine et la N-vinylpyrrolidone.

8. Procédé selon l'une des revendications 1 à 7,
dans lequel
la quantité de monomère(s) azoté(s) polymérisable(s) résiduel(s) après l'étape (c) est inférieure à environ 2000 parties par million du polymère hybride, par exemple moins de 500 parties par million du copolymère hybride.

9. Procédé selon l'une des revendications 1 à 8,
dans lequel
le ou les monomères azotés polymérisables contient ou contiennent un ou des monomères vinyliques azotés polymérisables.

10. Copolymère hybride qui contient un copolymère greffé azoté et un copolymère statistique contenant des unités d'un ou plusieurs monomères vinyliques, un ou plusieurs monomères azotés et éventuellement un ou plusieurs monomères ou copolymères oléfiniques, et dans lequel le copolymère hybride a une teneur en monomère azoté résiduel de moins d'environ 2000 parties par million de copolymêre hybride.

11. Copolymère hybride selon la revendication 10,
dans lequel
(i) le copolymêre greffé azoté est la 2-vinylpyridine sur un substrat de polyméthacrylate et le copolymère statistique est la 2-vinylpyridine avec un méthacrylate,
(ii) le copolymêre greffé azoté contient de la N-vinylpyrrolidone et le copolymère statistique contient de la N-vinylpyrrolidone avec un méthacrylate.
